Europäisches Patentamt

(19) European Patent Office

Office européen des brevets

(11) Publication number: **0 194 365**
**B1**

(12) **EUROPEAN PATENT SPECIFICATION**

(45) Date of publication of patent specification: **19.07.89**

(21) Application number: **85301673.1**

(22) Date of filing: **11.03.85**

(51) Int. Cl.⁴: **C 10 L 1/32**

(54) **Emulsions.**

(43) Date of publication of application:
**17.09.86 Bulletin 86/38**

(45) Publication of the grant of the patent:
**19.07.89 Bulletin 89/29**

(84) Designated Contracting States:
**AT BE CH DE FR GB IT LI LU NL SE**

(56) References cited:
**GB-A-2 066 288**
**US-A-3 876 391**

(73) Proprietor: **Hydroline Australia Pty. Ltd.**
**Level 25, MLC Centre George Street**
**Brisbane, 4000 Queensland (AU)**

(72) Inventor: **Bacon, John Kevin**
**27 Jindivick Street**
**Jindalee 4074, Queensland (AU)**

(74) Representative: **Matthews, Heather Clare et al**
**Keith W Nash & Co Pearl Assurance House 90-92**
**Regent Street**
**Cambridge CB2 1DP (GB)**

# EP 0 194 365 B1

**Description**

The present invention relates to a heat-stable emulsion of water-in-fuel oil. Such emulsions may be preheated prior to combustion.

It is well known that the addition of water to liquid hydrocarbon fuels so as to form an emulsion can have a number of beneficial effects as regards the combustion of the fuel. During combustion, the tiny droplets of water vaporise explosively within the fuel itself and lead to excellent atomisation of the fuel and improve combustion efficiency. Although the addition of the water detracts from the overall calorific value of the fuel, nevertheless small savings in overall fuel consumption can be achieved. Furthermore, the presence of the water tends to reduce the overall flame temperatures leading to lower nitrogen oxide emissions. The cleaner combustion also results in less emission of unburnt fuel components and carbon monoxide. Indeed, in the case of heavy fuel oils, the cleaner combustion of emulsified fuels may lead to substantial savings in furnace maintenance costs.

Hitherto, emulsified fuels have been burned in diesel engines by mechanically emulsifying the water with the oil shortly prior to combustion. Such emulsions are not stable over long periods and each engine must be fitted with its own emulsifier. Separate storage and handling systems must also be provided for the fuel and water respectively.

Stable emulsions of water in petroleum fractions obtained using an emulsifier are known from U.S. patent 3 876 391 and U.K. patent application 2 066 288. U.S. patent 3 876 391 discloses in Table 3 the use of an emulsifier blend of Tween-80 and Span-80 to produce emulsions of water in JP4 aviation fuel. U.K. patent application 2 066 288 discloses in Example 1 the use of sorbitan monooleate (a Span) and ethoxylated sorbitan monooleate (a Tween) to emulsify water in a mixture of light fuel oil and methanol. However, these prior disclosures are concerned only with light petroleum fractions which do not require preheating to lower their viscosity prior to combustion.

Fuel oils require preheating (eg to 40—50°C for fuel oil of a 200cS viscosity) prior to combustion. Often the fuel oil may be heated and cooled a number of times before combustion. This poses a problem since such heating generally causes water-in-oil emulsions to separate. By the term "fuel oil" we include fuel oil having a viscosity of 200—380cS and heavy fuel oils having nominal viscosities of 1000, 2000 and 6000 cS. Lighter fractions which do not require preheating, such as gasoline, automotive diesel fuel, gasoil, and industrial diesel fuel (light fuel oil of viscosity less than 200 cS), are excluded.

It is an object of the present invention to provide a heat-stable emulsion of water-in-fuel oil.

The present invention provides a heat-stable emulsion of water-in-fuel oil which comprises heavy fuel oil having a viscosity of at least 200cS, water, and 0.02—1% by volume of an emulsifier which comprises an admixture of

(i) 93—97 wt% of a sorbitan fatty acid monoester and

(ii) 3—7 wt% of polysorbate-80.

Typically, the fatty acid is lauric, palmitic, stearic or oleic acid. The sorbitan monoester is preferably sorbitan monooleate (available under the trade name Span-80).

Polysorbate-80 is a widely used term for the oleate ester of sorbitol copolymerised with approximately 20 moles of ethylene oxide for each mole of sorbitol. The ratio of components (i) and (ii) is in the region 93—97:3—7% by weight. If too much component (ii) is used, the emulsion becomes too viscous. This advantageous ratio is not disclosed in the prior art patent specifications discussed above.

The two components must be mixed together to provide the emulsifier before addition of water. Generally, the emulsifier is mixed with the water prior to addition of the hydrocarbon. Usually, emulsifier will be added in an amount of 0.02—1% by volume based on the hydrocarbon content. The water content may be up to 70% by volume of the hydrocarbon content. For normal use in a hydrocarbon fuel, the water content will usually be in the range 5—20%. However, where a particularly cool flame is required, for example in the flare stacks of drilling rigs, larger amounts of water e.g. up to 25% may be used.

The raw emulsion is then preferably passed through a centrifugal colloid mill in order to break up the water droplets.

In general, the water droplet size in the emulsion will be less than 100 micrometres. The drop size distribution generally varies dependent on the amount of water present. For example, in a typical 5% water emulsion, the majority of the water by volume was in drops between 10 and 25 microns in diameter, although a large number of much smaller drops were also present. For a 15% water emulsion, most of the water volume lay in drops in the region 50—100 micrometres.

The water-in-oil emulsion so produced is heat-stable over the long term and handles in a similar fashion to the hydrocarbon itself. In general, it is found that boiling and centrifuging do not substantially effect the emulsion.

Embodiments of the invention will now be described by way of example only with reference to the accompanying drawing and Examples.

## Example 1

Production of Water/Oil Emulsion

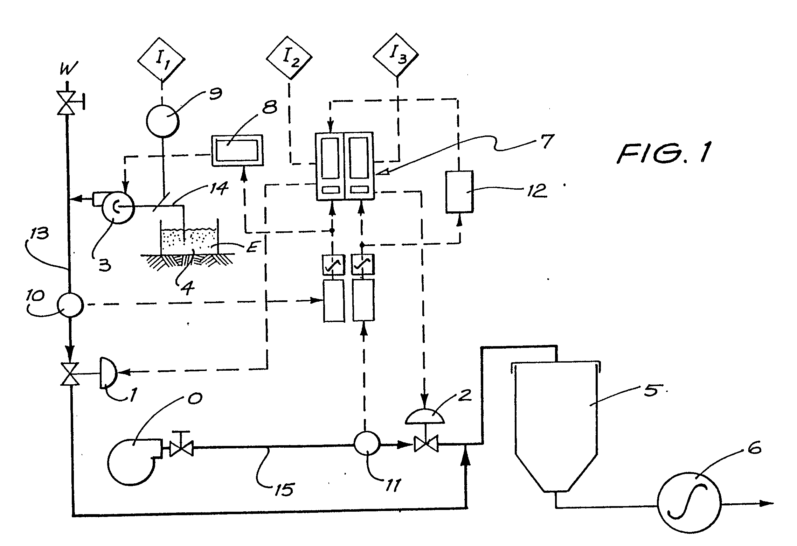

Figure 1 shows a continuous blending system wherein emulsifier E is introduced from tank 4 into a water flow W in a predetermined amount. The mixture of water and emulsifier is then mixed with oil O prior

2

to passing into a premixer tank 5 equipped with a vane mixer. The premixed emulsion is then passed into a centrifugal colloid mill 6 set at a 0.003 inch (0.008 cm) spacing so as to produce a water-in-oil emulsion.

The various flows are monitored as shown in the drawing and the data fed into a central controller 7, which in turn controls water/emulsifier flow valve 1, oil flow valve 2 and the emulsifier dosing pump 3 via the dosing pump control 8. Transducers 9, 10 and 11 respectively monitor the water/emulsifier flow in line 13, emulsifier flow in line 14, and oil flow in line 15. Flow rate information from transducers 10 and 11 is fed in the controller. Ratio bias 12 allows the water/oil ratio to be set. Warning lights $l_1$, $l_2$, $l_3$, show if "no additive", "high additive" and "low oil" conditions respectively occur. From the colloidal mill, the water-in-oil emulsion passes to a storage tank where it is usually preheated in a recirculating system before being combusted.

The emulsifier consisted of a mixture of 95% by volume sorbitan monooleate (Span 80 from Atlas Chemicals — a Trade Mark) and 5% by volume polysorbate-80 (Tween 80 — a Trade Mark).

The emulsifier content of the emulsion was 0.04 volume per cent based on the oil. For the purposes of the following tests, emulsions of 5%, 10% and 15% v/v water content were prepared. The oil was a heavy fuel oil.

For the 5% water emulsion, most of the water was in drops between 10 and 25 micrometres in diameter, with a large number (but small volume) of very small drops from 1—2 microns. For the 10% water emulsion, the very small drops were again observed, but the size range of drops was extended up to about 75 micrometres. For the 15% water emulsion, the very small drops were once again observed, with the larger drops extending in size up to about 100 micrometres and most of the water volume in drops from 50—100 micrometres.

The emulsions produced were opaque dark coffee-coloured liquids which were stable indefinitely.

## Example 2

Combustion of Emulsions

Independent tests were carried out by the University of Newcastle, New South Wales into a comparison of the combustion and heat transfer characteristics of heavy fuel oil with the water-oil emulsions as produced in Example 1.

A special experimental furnace was constructed which allowed measurement of fuel flow, flue gas composition, flue gas temperature, flame and radiation temperatures, heat absorption (by a water-cooled coil) and flame visualisation. This way it is possible to construct an overall heat balance.

Photograph of flames of neat oil, 5%, 10% and 15% v/v water in oil showed qualitatively that the water/oil emulsion fuels produced shorter, more intense flames with a higher peak flame temperature. This was confirmed by measurements of flame radiation with optical and total radiation pyrometers.

Measurements of the heat absorbed by the water-cooled coil surrounding the flame showed that the increased flame temperatures resulted in higher heat transfer rates and higher furnace thermal efficiencies. The greatest increase in efficiency was achieved with a 10% water in oil emulsion, and this also led to an increase in peak flame temperature of about 50°C.

The results of the heat balance on the furnace are given in the Table, which shows the percentage of heat absorbed in the water-cooled loop which is a measure of the heat produced in the flame. It can be seen that the amount of heat produced in the flame is generally greater for the water-in-oil emulsions, particularly for the 10% water content. However, it is generally noted that at the lower water contents (e.g. 5%) there is a reduction in heat output, presumably due to the reduction in calorific value of the fuel exceeding the increase in combustion efficiency.

TABLE

|  |  | Water Content % v/v | | | |
|---|---|---|---|---|---|
|  |  | 0 | 5 | 10 | 15 |
| Thermal input | % | 100 | 100 | 100 | 100 |
| Heat absorbed in water-cooled loop | % | 38 | 35 | 44 | 41 |
| Flue gas loss | % | 43 | 42 | 44 | 44 |
| Wall loss | % | 10 | 11 | 10 | 10 |
| Unaccounted loss | % | 9 | 12 | 2 | 5 |

Example 3

Comparison of Emulsion stabilities

A) Emulsions of water in hevy fuel oil were prepared using the following emulsifier blends falling outside the scope of the present invention
    i) sorbitan monooleate + Tween 20
    ii) sorbitan monooleate + Tween 81
    iii) dioctyl sodium sulfosuccinate + Tween 80 ·
    iv) dioctyl sodium sulfosuccinate + Tween 81
    v) dioctyl sodium sulfosuccinate + Tween 20

In each blend the two components were varied from 5/95 wt% to 95/5 wt% in increments of 10 wt%.

In some cases stable water-in-oil emulsions resulted, but these emulsions separated once heated to 45°C. In no case did a heat-stable emulsion result.

B) Emulsions of water in heavy fuel oil were prepared using an emulsifier blend of sorbitan monooleate + Tween 80 in varying proportions from 5/95 wt% to 95/5 wt% in increments of 5 wt%. It was found that the following blend

95 wt% sorbitan monooleate + 5 wt% Tween 80 gave the best results in terms of producing a heat-stable water-in-oil emulsion.

**Claims**

1. A heat-stable emulsion of water-in-fuel oil which comprises heavy fuel oil having a viscosity of at least 200cS, water, and 0.02—1% by volume of an emulsifier which comprises an admixture of
    (i) 93—97 wt% of a sorbitan fatty acid monoester, and
    (ii) 3—7 wt% of polysorbate-80.
2. An emulsion according to claim 1, wherein the monoester is sorbitan monooleate.
3. An emulsion accordiong to claim 1 or 2, wherein the water content is 5—20% by volume based on the volume of the fuel oil.
4. An emulsion according to any one of the preceding claims, wherein substantially all the water droplets have a size less than 75 micrometres.

**Patentansprüche**

1. Hitzestabile Wasser-in-Brennöl-Emulsion, enthaltend schweres Brennöl mit einer Viskosität von mindestens 200 cS, Wasser und 0,02—1 Vol.-% eines Emulgators, enthaltend ein Gemisch von
    (i) 93—97 Gew.-% eines Sorbitanfettsäuremonoesters und
    (ii) 3—7 Gew.-% Polysorbat-80.
2. Emulsion nach Anspruch 1, in der der Monoester Sorbitanmonooleat ist.
3. Emulsion nach Anspruch 1 oder 2, in der der Wassergehalt, bezogen auf das Volumen des Brennöls, 5—20 Vol.-% beträgt.
4. Emulsion nach einem jeden der vorstehenden Ansprüche, in der im wesentlichen sämtliche Wassertröpfchen eine Größe von weniger als 75 Mikrometer aufweisen.

**Revendications**

1. Emulsion stable à la chaleur d'eau dans une huile combustible, qui comprend:
    — de l'huile combustible lourde ayant une viscosité d'au moins 200 cS, de l'eau, et
    — 0,02—1% en volume d'un émulsifiant qui comprend un mélange de:
    (i) 93—97% en poids de monoester d'acide gras de sorbitanne, et
    (ii) 3—7% de polysorbate-80.
2. Emulsion selon la revendication 1, dans laquelle le monoester est du monooléate de sorbitanne.
3. Emulsion selon la revendication 1 ou 2, dans laquelle la teneur en eau est de 5—20% en volume en se basant sur le volume de l'huile combustible.
4. Emulsion selon l'une quelconque des revendications précédentes, dans laquelle sensiblement toutes les gouttelettes d'eau ont une taille inférieure à 75 micrométres.

FIG. 1

EP 0 194 365 B1